# EUROPEAN PATENT APPLICATION

(11) **EP 3 211 570 A1**
(43) Date of publication of application: **30.08.2017**
(21) Application number: 17155899.2
(22) Date of filing: 13.02.2017
(51) Int. Cl.: G06Q 10/00

(54) **WASTE MANAGEMENT SYSTEM HAVING CUSTOMER PORTAL**

(30) Priority: 24.02.2016 US 201662299478 P; 31.05.2016 US 201662343351 P
(71) Applicant: Rubicon Global Holdings, LLC, Atlanta, GA 30328 (US)
(72) Inventor: RODONI, Philip, Georgia, Atlanta 30030 (US); LAABS, Keith, Georgia, Atlanta 30030 (US)
(74) Representative: Finnegan Europe LLP

(57) **Abstract**

A system is disclosed for managing waste. The system may have a customer portal, and a central processing unit in electronic communication with the customer portal. The central processing unit may be configured to receive, via the customer portal, information an amount of business conducted at a customer location. The central processing unit may also be configured to selectively determine a custom offer for recommended service based on the information, and to cause the custom offer to be displayed on the customer portal.

## Description

### Technical Field

The present disclosure relates generally to a management system and, more particularly, to a waste management system having a customer portal.

### Background

Commercial and residential waste removal service providers typically dispatch haul vehicles to customer properties according to a predetermined pickup schedule. Pickup schedules are often designed to provide periodic waste removal services within a particular geographical area in an efficient manner. Under a traditional service model, each customer along an established pickup route within a common geographical area receives waste removal service on the same day each week. On this day, waste containers on each customer property are emptied by the service provider, regardless of how full each container is. Customers that subscribe to traditional waste removal services are billed on a periodic basis (e.g., monthly, quarterly, etc.) for their subscription.

Although traditional waste removal services can be useful in some instances, they can also be inflexible. For instance, some customers (e.g., restaurants, businesses, apartment buildings, and residences) may fill their containers before their next regularly scheduled pickup. In these instances, the customers may be required to use additional on-demand services in order to avoid waste overflow. In contrast, the same or different customers may, at other times, produce less waste and not require service at the same frequency. In this situation, the customers may overpay for their subscription. In addition, due to varying waste generation rates, available space, and other factors, some customers may wish to use a different number and/or size of containers than other customers. Traditional waste removal services may not be able to accommodate these varying needs.

The disclosed system is directed to overcoming one or more of the problems set forth above and/or other problems of the prior art.

### Summary

In one aspect, the present disclosure is directed to a waste management system. The waste management system may include a customer portal, and a central processing unit in electronic communication with the customer portal. The central processing unit may be configured to receive, via the customer portal, information regarding an amount of business conducted at a customer location. The central processing unit may also be configured to selectively determine a custom offer for recommended service based on the information, and to cause the custom offer to be displayed on the customer portal.

In another aspect, the present disclosure is directed to a method for managing waste services. The method may include receiving, via a customer portal, information regarding at least one of a type of customer location requiring service, a size of the customer location, and a foot or vehicle traffic at the customer location a throughput of the customer location, or a revenue of the customer location. The method may also include selectively determining a custom offer for recommended service based on the information, and displaying the custom offer on the customer portal.

In yet another aspect, the present disclosure is directed to a non-transitory computer readable medium containing computer-executable programming instructions for performing a method of waste management. The method may include receiving, via a customer portal, information regarding at least one of a type of customer location requiring service, a size of the location, a foot or vehicle traffic at the customer location, a throughput of the customer location, or a revenue of the customer location. The method may also include selectively determining a custom offer for recommended service based on the information, and displaying the custom offer on the customer portal.

### Brief Description of the Drawings

Fig. 1 is a diagrammatic illustration of an exemplary disclosed waste management system;
Fig. 2 is a flowchart depicting an exemplary disclosed method that may be performed by the system of Fig. 1;
Figs. 3-11 are diagrammatic illustrations of exemplary disclosed graphical user interfaces that may be used by a customer to access the system of Fig. 1; and
Fig. 12 is a chart depicting an exemplary map stored in memory and/or referenced by the waste management system of Fig. 1 during performance of the method of Fig. 2.

### Detailed Description

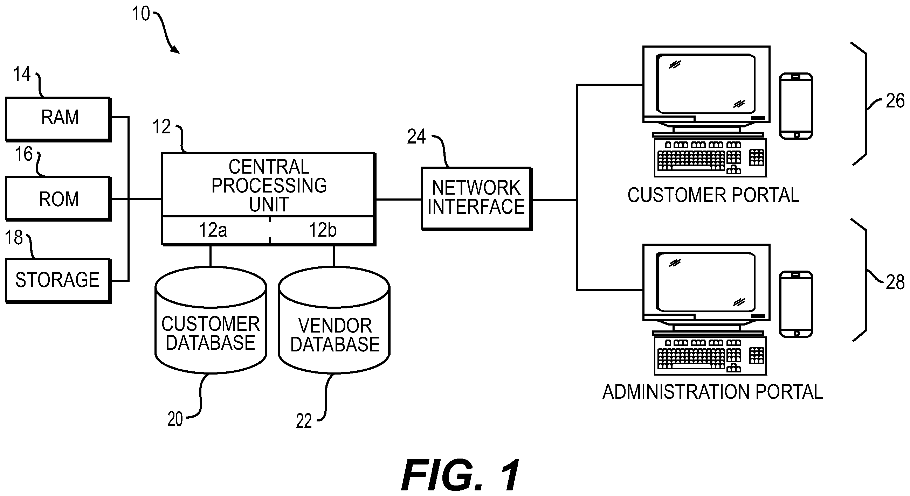

Fig. 1 illustrates an exemplary waste management system ("system") 10 configured to coordinate waste management services for multiple different customers. The services may include, for example, the removal of waste materials from one or more containers (not shown), the replacement of containers, and/or the placement of additional containers. System 10 may include, among other things, a central processing unit ("CPU") 12, a random access memory (RAM) 14, a read-only memory (ROM) 16, a storage 18, at least one database (e.g., a customer database 20 and a vendor database 22), a network interface 24, and at least one user portal (e.g., a customer portal 26, and an administration portal 28). CPU 12 may be configured to receive data from different users via portals 26, 28, and to record, process, and share the data with the same and/or with other users via the same or different portals 26, 28. It is contemplated that system 10 may include additional, fewer, and/or different components than those listed above. It is understood that the type and number of listed devices are exemplary only and not intended to be limiting.

CPU 12 may include an arrangement of electronic circuitry configured to perform arithmetic, logic, input/output, and control operations during sequential execution of preprogrammed instructions. The instructions may be loaded from ROM 16 into RAM 14 for execution by CPU 12. It should be noted that, although CPU 12 is shown and described as a single "unit", it is contemplated that the functions of CPU 12 could alternatively be completed by any number of co-located or remotely distributed and cooperating processing units, as desired. Numerous commercially available microprocessors may be configured to perform the functions of CPU 12. Further, the microprocessors may be general-purpose processors or specially constructed for use in implementing the disclosed concepts.

The functions of CPU 12 may be divided among any number of different modules. In the disclosed embodiment, these modules include at least a pricing module 12a and an administration module 12b. In general, the word "module," as used herein, refers to a collection of software instructions (e.g., instructions that are compiled and linked into an executable program) or embedded firmware that performs the same function. It will be appreciated that a particular module could be callable from another module or from itself, and/or can be invoked in response to detected events or interrupts. Modules 12a and 12b, if embodied as software, may be configured for execution by CPU 12 and provided on a computer readable medium, such as a compact disc, digital video disc, flash drive, magnetic disc, or any other tangible medium, or as a digital download (and can be originally stored in a compressed or installable format that requires installation, decompression, or decryption prior to execution).

Storage 18 may embody any appropriate type of mass storage provided to hold information that CPU 12 may need in order to perform the disclosed processes. For example, storage 18 may include one or more hard disk devices, optical disk devices, or other storage devices that provide sufficient storage space.

Databases 20 and/or 22 may contain model data and any information relating to particular customer records and/or vendor records under analysis. The information stored within databases 20 and/or 22 may come from any source known in the art and be provided at any time and frequency. For example, the information could be manually entered based on recorded statistics and/or live observations, automatically retrieved from an external server based on a predetermined schedule, continuously streamed from a customer and/or vendor site, spontaneously uploaded by users via portals 26 and 28 (e.g., by way of CPU 12), intermittently pulled from "the cloud," or obtained in any other manner at any other time and frequency. In addition to the customer and vendor information, databases 20 and/or 22 may also include analysis tools for analyzing the information stored therein. CPU 12 may use databases 20 and/or 22 to determine relationships and/or trends relating to particular customers, vendors, users, and/or uses of system 10, and other such pieces of information. CPU 12 may pull information from databases 20 and/or 22, manipulate the information, and analyze the information. CPU 12 may also update the information, store new information, and store analysis results within databases 20, 22, as desired.

CPU 12 may communicate with a user of system 10 (e.g., a user accessing any one of portals 26 and 28) via network interface 24. Network interface 24 may include, alone or in any suitable combination, a telephone-based network (such as a PBX or POTS), a local area network (LAN), a wide area network (WAN), a dedicated intranet, and/or the Internet. Further, the network architecture may include any suitable combination of wired and/or wireless components. For example, the communication links may include non-proprietary links and protocols, or proprietary links and protocols based on known industry standards, such as J1939, RS-234, RP1210, RS-422, RS-485, MODBUS, CAN, SAEJ1187, Bluetooth, the Internet, an intranet, 802.11 (b, g, n, ac, or ad), or any other communication links and/or protocols known in the art.

Each of portals 26 and 28 can include one or more of a router, an Ethernet bridge, a modem (e.g., a wired or wireless modem), or any other conventional computing components known in the art (not shown) such as a processor, input/output (I/O) ports, a storage, and a memory. The processor of each portal 26, 28 can include one or more processing devices, such as microprocessors and/or embedded controllers. The storage can include volatile or non-volatile, magnetic, semiconductor, tape, optical, removable, non-removable, or other type of computer-readable medium or computer-readable storage device. The storage can be configured to store software programs (e.g., apps) downloaded from CPU 12 via network interface 24 and/or other information that can be used to implement one or more of the disclosed processes. The memory can include one or more storage devices configured to store the downloaded information. Each of portals 26 and 28 may be able to communicate with CPU 12, with databases 20 and/or 22, and/or directly with each other via network interface 24.

Each of portals 26 and 28 may provide a graphical user interface (GUI) that is configured to display information to users thereof, and that includes a means for receiving input from the user. In one embodiment, an exemplary portal is a computer (e.g., a laptop or desktop computer) having a console and a keyboard/mouse. In another embodiment, an exemplary portal is a handheld mobile device, such as a smart phone or a tablet having a touchscreen display and/or a keyboard. Other types of portals may also be utilized. The GUI of portals 26 and 28 may allow the user to receive (e.g., visually and/or audibly) information from system 10 via network interface 24, to upload information to system 10, and/or to correspond with other users of system 10.

Portal 26 may be dedicated for use by a customer (e.g., an existing customer already having a particular account or contract with the provider of system 10 or a new customer desiring to establish such an account or contract). It is contemplated that any number of portals 26 may be simultaneously connected to network interface 24 for use by any number of different customers. Each such portal 26 may allow the customer to log into system 10 (e.g., via a web-based program, an internet site, or a mobile app) and to request waste removal services. The request for waste removal services input via portal 26 may be specific to a particular customer location or generic for multiple locations and include among other things, an indication as to how much waste (e.g., volume, weight, container size, etc.) should be removed, a type of the waste (e.g., standard waste appropriate for a landfill, recyclables, organic, hazardous, etc. or a combination of these waste products), when the waste is required or preferred to be removed (e.g., frequency, particular days or dates, times of day, etc.), how the waste should be removed (e.g., travel routes, access gates, cleanliness requirements, etc.), and/or how much the customer is willing to pay for the waste removal service. Other types of information may also be input by the customer, if desired.

Portal 26 may also provide the customer with information regarding past and/or future removal services. This information could include confirmation of a service-related request (e.g., a request for service, a request for quoting, a request for service cancellation, a request for billing, etc.) being received from the customer and/or accepted, cost quoting and/or bidding for services, confirmation of a service being provided, updates regarding an ongoing service, cancellation or adjustments to current services, vendor comments, and/or billing for completed services. Other forms of information could also be provided to the customer via portal 26.

Administration portal 28 may be dedicated for use by an administrator of system 10 (e.g., an account representative, a sales associate, a service manager, an IT manger, etc.). It is contemplated that any number of portals 28 may be simultaneously connected to network interface 24 for use by any number of different administrators associated with the same or different accounts. Each such portal 28 may allow the administrator to log into system 10 (e.g., via a web-based program, an internet site, or a mobile app) and to manually address a service request, to address and/or monitor a service event, to manage a particular customer account, to create new customer accounts, to generate contracts for particular customers, to manage existing service contracts, to initiate billing, to rank customers, and/or for other similar purposes. It is contemplated that some or all of the functions described above as being manually-completed functions could alternatively or additionally be automatically completed by administration portal 28, if desired.

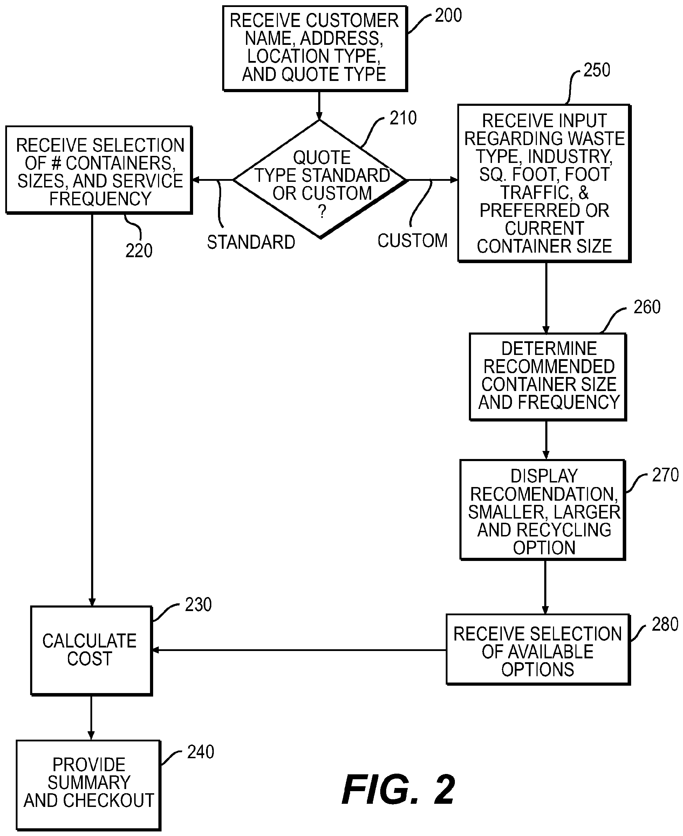

Based on the information received from received from portals 26 and 28, CPU 12 can be configured to execute instructions stored on computer readable medium to perform methods of waste management. For example, CPU 12 may be configured to determine a particular service need for a particular customer, to arrange for and/or recommend a particular service, to monitor the service, and to provide feedback (e.g., billing, customer ranking, etc.) based on the monitored service and customer interaction. While CPU 12 is disclosed as performing these functions and then responsively communicating corresponding information between portals 26 and 28, it is contemplated that one or more of the portals could alternatively or additionally perform some or all of these functions. This process is illustrated in Fig. 2, and will be explained in more detail in the following section to further illustrate the disclosed concepts.

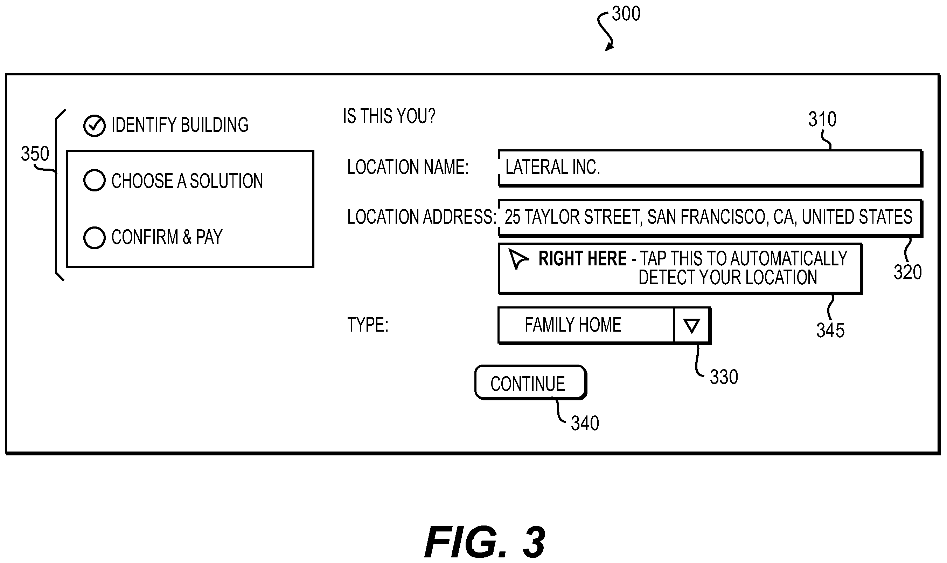

Figs. 3-9 represent exemplary Graphical User Interfaces (GUIs) that may be shown on any one or more of portals 26 and 28. Figs. 3-9 will also be discussed in greater detail below to further illustrate the disclosed concepts.

### Industrial Applicability

The disclosed system may be applicable to the waste service industry, where flexible customer service is desirable. The disclosed system may provide a customer with different service options, related cost quoting, and service reporting. In some instances, the disclosed system may also allow a customer to have direct control over waste services. Operation of system 10 will now be described with reference to Fig. 2.

As shown in Fig. 2, operation of system 10 may begin with CPU 12 receiving login information from a particular customer by way of portal 26 (Step 200). This information may include, among other things, a customer name, a customer address, a location type, a desired waste removal service, and a type of quote that the customer is requesting. In some instances, the customer may be a returning customer, and the associated customer information may already be saved within customer database 20. In these instances, the customer may be shown the existing information and only be asked at step 200 to confirm or edit the information.

CPU 12 may then be configured to determine if the type of quote that the customer is requesting is a quote for a standard service package or a quote for a custom offer (Step 210). The standard service package may be associated with a selection of any number of predefined packages available to the customer. The predefined packages could include, among other things, a number of containers to be left at the customer's location, a size of the containers, a frequency of service visits, a type of waste, and a cost. In contrast, the custom offer may be associated with an automated recommendation for service based on customer response to various questions.

When CPU 12 determines that the customer has requested a standard service package, for example via customer portal 26, the customer may be prompted to make a selection from a list of available services (Step 220). The list of services available to a particular customer (e.g., for a particular geographical region corresponding to the customer's location) may be stored in and retrieved from vendor database 22. The type of services available will largely be a result of the vendors willing to service the particular geographical region and the associated prices that they offer. After receiving the selections, CPU 12 may then calculate a cost corresponding to the selections (Step 230). The cost may be determined using an algorithm stored in the memory of CPU 12, as a function of the number of requested containers, the requested size(s) of the containers, the requested service frequency, factors associated with vendors available in the geographical region to perform the service, historical quotes for similar services in the same region, past contracts with local vendors, etc. CPU 12 may display on portal 26 a summary of the customer's selections, along with the calculated cost of the requested services, allowing the customer to "check out" and pay for the corresponding service (Step 240). In some instances, the cost calculations may be performed dynamically as the customer is making selections, such that the customer may be able to see how the different selections affect the total cost of the service.

Returning to step 210, when CPU 12 determines that the customer would like a custom offer, the customer may be prompted to input additional information associated with an amount of business conducted at the customer location (Step 250). This information could include, among other things, a type of industry (e.g., restaurant, clothing retail, supermarket, industrial, manufacturing, etc.) that is associated with the customer location, a type of waste (recyclables, waste, mix, etc.) produced by the customer, an indication as to a volume of waste that might be produced at the customer location (e.g., on a daily basis), and a preferred or required container size. The volume indication may be associated with a level of service performed at the customer location, for example how big the customer location is (e.g., how many square feet of floor space is contained at the location, how many hospital beds or exam rooms are housed in the location, etc.) and/or how busy the customer location is (e.g., a foot or vehicle traffic of the location, an occupancy of the location, an annual revenue, a throughput, etc.). The volume indication may then be used to calculate the actual volume of waste being produced at the customer location.

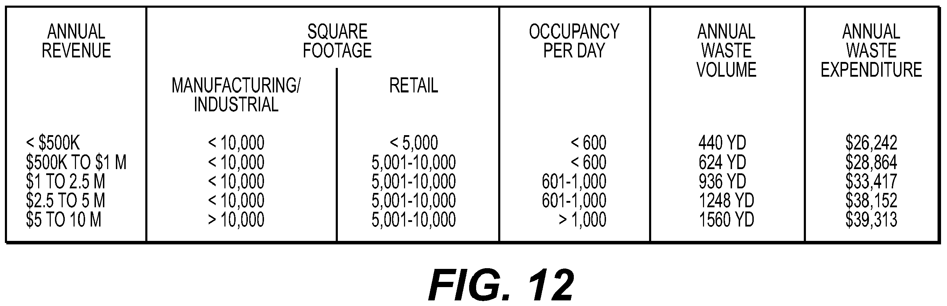

Fig. 12 illustrates an exemplary map (e.g., a lookup table, an equation, an algorithm, etc.) that may be referenced by CPU 12 during completion of step 210. In this example, CPU 12 may reference any one of a square footage of the customer location, occupancy of the customer location, and/or an annual revenue of the customer location to an expected annual waste volume and/or expenditure. In some embodiments, the square footage of the customer location and/or occupancy of the customer location may be used to first determine the annual revenue of the customer location, which may then be used to determine the expected annual waste volume and/or expenditure.

Returning to Fig. 2, after completion of step 250, CPU 12 may then determine a recommended container size, a number of containers, and a frequency of the corresponding service (Step 260). This determination may be made using the same or another map (e.g., another lookup table, equation, graph, algorithm, etc.) stored in memory as a function of the input received at step 250. CPU 12 may then cause the recommended service to be displayed on customer portal 26, along with the option for the customer to choose a reduced or increased level of service (e.g., smaller, larger, fewer, and/or a greater number of containers than recommended, greater or lesser frequency, and/or to include recycling services) (Step 270). It is contemplated that a cost or cost estimate of the recommended, reduced, and/or increased levels of service may be shown adjacent each of the options. In some instances, the particular combination of options selected by the customer may require input (e.g., bidding) from available vendors before the associated cost estimate can be displayed and/or confirmed. CPU 12 may then receive a selection from the customer of one of the options (Step 280), and control may proceed to step 240 described above where the summary and check out may be completed.

Fig. 3 shows an exemplary GUI 300 that may be shown on customer portal 26 and used by the customer to facilitate the process described above and shown in Fig. 2. As can be seen in Fig. 3, GUI 300 may correspond with step 200 in the flowchart of Fig. 2. In particular, via GUI 300, the customer may be able to enter and/or confirm their name, address, and location type (e.g., business or family home) via one or more open windows 310, 320 and/or drop-down menus 330. A "Continue" button 340 may also be provided for use by the customer in navigating GUI 300, after the other selections have been made. In some embodiments, button 340 may only become active after windows 310 and 320 have been filled in and/or after a selection from drop-down menu 330 has been made. A status indicator 350 may be provided on a side (e.g., on a left side) of GUI 300, indicating to the customer at what stage in the request process the customer is currently at and what other stages may exist. GUI 300 may generally be shown when the customer is at a stage labeled "Identify Building" in status indicator 350. The current stage may be highlighted, checked, or otherwise made distinguishable relative to other listed stages.

In one embodiment, GUI 300 may provide for an additional option. In particular, GUI 300 may include a button 345 for use by the customer to request for a waste pickup location to be automatically detected (i.e., instead of manually entered, and/or as a way to refine the manually entered address). When button 345 is selected by the customer, central processing unit 12 (e.g., in conjunction with a locating device of customer portal 26) may detect the current location and store the current location as a desired waste pickup location. GUI 300 may display the location (e.g., as a set of GPS coordinates, as an address, etc.) with an icon on a map, which the user may review for correctness, adjustment, and/or confirmation.

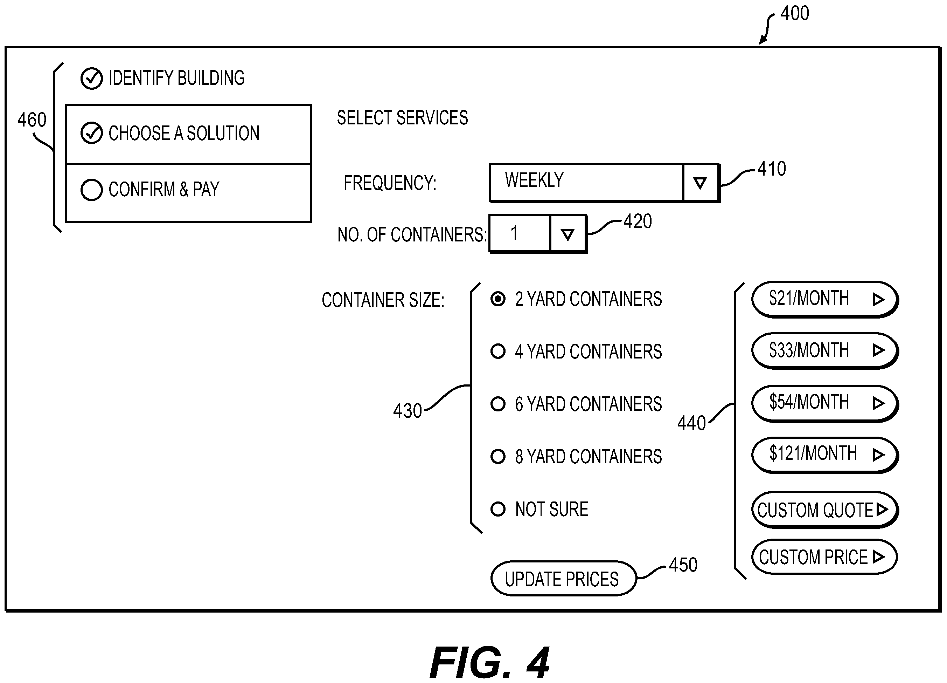

Fig. 4 shows another exemplary GUI 400, which corresponds with steps 210 and 220 described above and shown in Fig. 2. As can be seen in Fig. 4, GUI 400 may include a frequency pull-down menu 410 allowing a selection of a service frequency (e.g., weekly, bi-weekly, monthly, etc.); a container number pull-down menu 420 allowing a selection of a number of containers to be serviced; and any number of radio buttons 430, each representing a different size (e.g., dimension and/or volume) of available container. It is contemplated that, in some areas, the number and/or sizes of available containers may be limited or restricted based on requirements (e.g., space constraints) entered by the customer. In some embodiments, a particular one of radio buttons 430 (e.g., a lowest button shown in GUI 400) may also allow the customer to indicate that the customer does not know the size of container that should be selected. In these embodiments, selection of this particular radio button may indicate to CPU 12 the desire for a custom offer and result in control proceeding from step 210 described above, to step 250.

In an exemplary embodiment, when the customer selects the "not sure" button from GUI 400, in addition to or instead of providing the custom offer described above, the customer may instead be able to provide a price input (e.g., a maximum price or a desired price range) for waste services. In response to this input, one or more available service and/or receptacle options that conform to the user's selected price may then be displayed on GUI 400.

When the customer selects one of radio buttons 430 (i.e., a button other than the "not sure" button), a cost associated with the particular selection at the already selected frequency and number of containers, may be dynamically provided in a corresponding display window 440 (e.g., to the right of radio buttons 430). In some instances, the cost associated with each change in selection (e.g., change in frequency, number of containers, and/or size of containers) may be automatically updated within display window 440 as the change is made. In other instances, however, an additional "Update" button 450 may be provided to trigger the cost updating functionality. Like GUI 300, GUI 400 may also include a status indicator 460 provided on a left side. GUI 400 may generally be shown at a stage labeled "Choose A Solution" in status indicator 460.

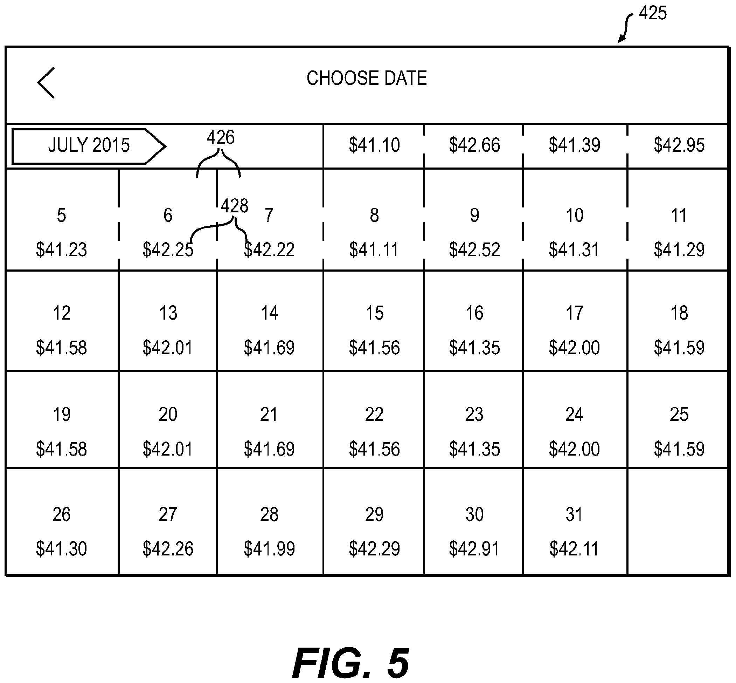

In some embodiments, it may be more or less expensive to provide the same waste services, depending on the day of the week and/or the date on which the service is requested. For example, because most businesses do not wish waste services to be performed at a busy time, weekends and/or holidays may be an undesirable to have receptacles 18 serviced. This may cause the remaining days of the week and/or month to be busier for the waste service provider. Accordingly, the waste service provider may have higher costs on those days (e.g., to compensate operators for overtime work) and/or extra capacity on the weekends or holidays. The waste service provider may be able to better balance work load and efficiencies by offering incentives to customer for waste services performed at the undesirable times. Fig. 5 illustrates one way that these incentives may be offered to the customer.

Fig. 5 illustrates a GUI 425 that is configured to display a scheduling parameter 426 (e.g., a day of the week or month) that is selectable by the customer. GUI 425 may also be configured to display a service parameter (e.g., price, availability, etc.) 428 associated with scheduling parameter 426. Service parameter 426 may be determined at least partially based on previous customer inputs, such as selected receptacle types, selected numbers of receptacles to be serviced, and selected service frequency. Scheduling parameter 426 may be highlighted on GUI 425 upon being selected to indicate which options have and have not been selected. GUI 425 may include graphical buttons or other objects configured to allow the customer to switch between calendar months represented on GUI 425, as desired. Although GUI 425 is described as providing selectable temporal designations in connection with graphical calendar components, other graphical components may be used, such as dropdown menus, scrollable lists, popup windows, etc.

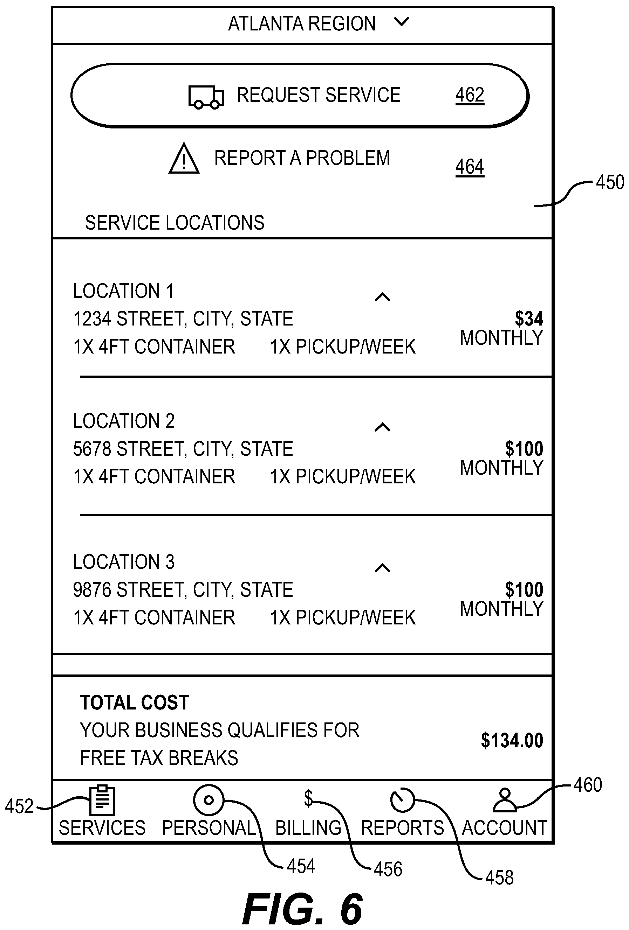

As shown in Fig. 6, a GUI 450 may display one or more saved service settings associated with multiple pickup locations of a single customer. In particular, as a customer creates service requests using the disclosed app, the requests may be stored in connection with the customer's profile for future selection and modification. GUI 450 may display one or more active and/or inactive service requests, along with associated service parameters, such as the location, size and type of receptacle 18, pickup frequency, and cost. The service requests may be displayed in a fixed manner or presented as a scrollable list on GUI 450. Each request may be selectable by the customer and highlighted upon selection. A total cost associated with all active services requests in a customer's profile may also be displayed on GUI 450.

In some embodiments, GUI 450 may further include a request service button 462 configured to initiate one of the displayed active service requests and/or to cause an inactive service request to become active. Likewise, GUI 450 could include a cancel service button (not shown) used to cancel one of the active service requests. In some embodiments, GUI 450 may also include a report a problem button 464 configured to alert a service provider of an issue with one of the active service requests.

In some jurisdictions, tax relief may be available for certain qualifying costs associated with waste removal. Based on locational criteria, such as the personal information of the customer, the location of receptacles 18 serviced, cost information, and/or other criteria, the disclosed app may determine that details in a customer's profile may qualify the customer for certain tax relief. GUI 450 may be further configured to display whether a tax relief is available, for example as a suggestion that the customer seek further information.

GUI 450 may facilitate additional waste management activities, such as service selection, personal or business waste pickup management, billing activities, providing reports and statistical analyses, and editing account information. For example, in one aspect, GUI 450 may include a services button 452 configured to receive customer input indicative of a request to access lists of available services and receptacles that may be selectable by the customer. In another aspect, GUI 126 may include a scale button 454 configured to receive customer input indicative of a request too toggle between management of personal and business-related services on the customer's account. In instances where the customer is using the disclosed app in a business mode, scale button 454 may be toggled to a personal mode when selected by the customer. Conversely, when the user is managing in the personal mode, scale button 454 may be toggled to the business mode. In another aspect, GUI 450 may include a billing button 456 configured to receive a request to cause display of billing information, such as amounts due, amounts paid, auto-pay options, payment details, account activity and history, projected bills, periodic statements (e.g., monthly, quarterly, annually, etc.), and/or other billing information. One or more types of billing preferences or billing activities may be altered or carried out by entering information via the disclosed app.

In another aspect, GUI 450 may include a reports button 458 configured to receive user input indicative of a request to access one or more reports or results of statistical analyses. Reports and analyses may include information regarding numbers of pickups consumed, amounts of waste removed (e.g., tons, pounds, cubic yards, etc.), types of waste removed (e.g., types of metals, plastics, glass, compostable materials, yard waste, general waste, industrial waste, appliances, cardboards, office paper, etc.), periodic expenditures (e.g., costs of annual, monthly, weekly uses), and/or other information. Reports and analyses may be presented via graphical components, such as dropdown menus, scrollable lists, popup windows, etc., on or over GUI 450.

In another aspect, GUI 450 may include an account button 460 used to cause display of customer account information. Account information may include, for example, a name of an account holder, contact information of the account holder (e.g., address, telephone number, email address, fax number, etc.), type of account (e.g., personal, commercial, both, etc.), registered permissive users and contact personnel of the account, and/or other information. Account information displayed via GUI 450 may be selectable and by the customer.

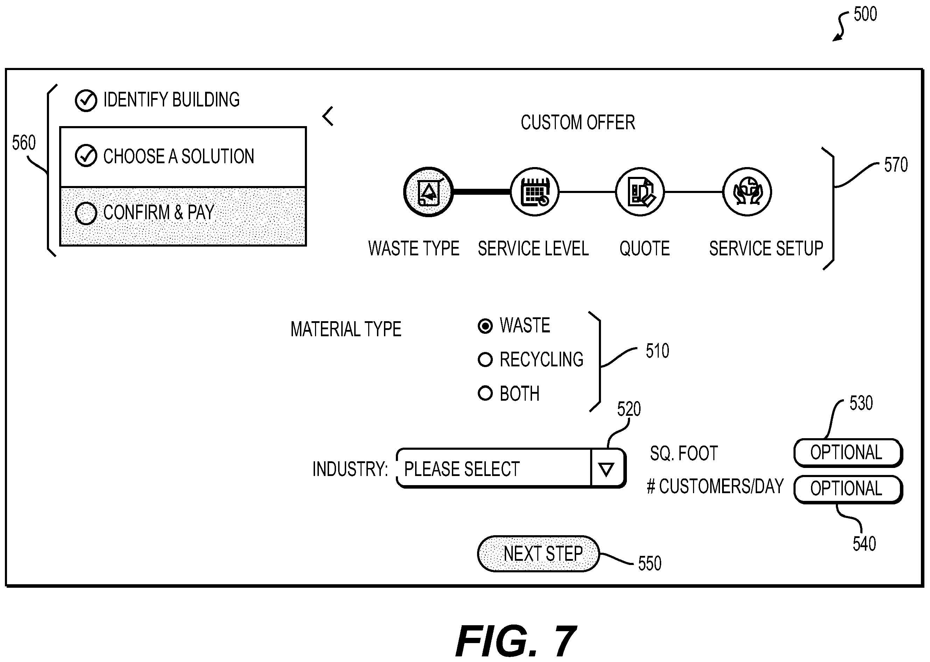

Fig. 7 shows another exemplary GUI 500, which corresponds with step 250 described above and shown in Fig. 2. As can be seen in Fig. 5, GUI 500 may include a plurality of radio buttons 510, allowing the customer to indicate a type of waste (e.g., waste, recycling, both) generated at the customer's location, as well as an Industry pull-down menu 520 allowing the customer to select from a list of available options the type of industry (e.g., restaurant, clothing retail, supermarket, etc.) associated with the customer location. In some embodiments, the type of industry could be automatically entered based on, for example, a customer name or location. GUI 500 may also include an optional Size window 530 allowing the customer to enter a square footage of the customer's location, an optional Traffic window 540 allowing the customer to enter a number of customers per day that pass through the customer location, or another similar window or combination of windows allowing the customer to indicate potential waste generation rates. After making selections via radio buttons 510, drop-down menu 520, and windows 530 and 540, the customer may be able to select a "Next Step" button 550 that will take the customer to a next GUI in the custom offer menu. It is contemplated that button 550 could be omitted, in some embodiments. Like GUIs 300 and 400, GUI 500 may also include a status indicator 560 provided on a left side. GUI 500 may generally be shown at the same stage as GUI 400 (i.e., at the "Choose A Solution" stage). However, an additional status indicator 570 may be located at a top of GUI 500 and represent progression through the "Choose A Solution" stage, from a "Waste Type" phase, to a "Service Level" phase, to a "Quote" phase, to a "Service Setup" phase. GUI 500 may generally correspond with the "Waste Type" phase. As with the stages of status indicator 560, the phases of status indicator 570 may also be highlighted, checked, or otherwise made distinguishable relative to the other listed phases.

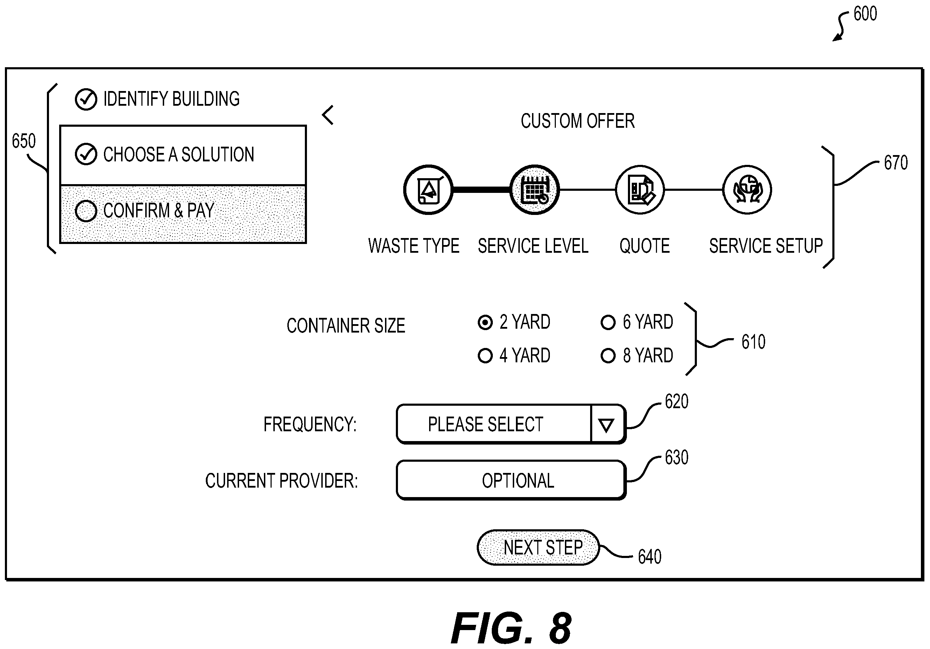

Fig. 8 shows another exemplary GUI 600, which also corresponds with step 250 described above and shown in Fig. 2. As can be seen in Fig. 8, GUI 600 may include a plurality of radio buttons 610, allowing the customer to indicate a preferred and/or current size of container to be placed at or that has already been placed by another service provider at the customer location (e.g., 2, 4, 6, or 8 yard container), as well as a "Frequency" menu 620 allowing the customer to indicate a desired service frequency and/or a frequency of service already being implemented by another provider. In some embodiments, GUI 500 may also include an optional "Current Provider" window 630 allowing the customer to enter a name of a current service provider. It should be noted that the custom offer process implemented by CPU 12 may continue even if one or more of the windows of GUI 600 are not filled out or otherwise selected. In particular, it is contemplated that the information received via GUI 600 may primarily be for marketing and/or comparison purposes, and that the custom offer may still be generated without this information, if desired. After making selections via radio buttons 610, drop-down menu 620, and/or window 630, the customer may be able to select a "Next Step" button 650 that will take the customer to a next GUI in the custom offer menu. Like GUI 500, GUI 600 may also include a status (e.g., a stage) indicator 650 provided on a left side and a status (e.g., a phase) indicator 660 provided at a top side. GUI 600 may generally be shown at the same stage as GUIs 400 and 500 (i.e., the "Choose A Solution" stage), and at the "Service Level" phase.

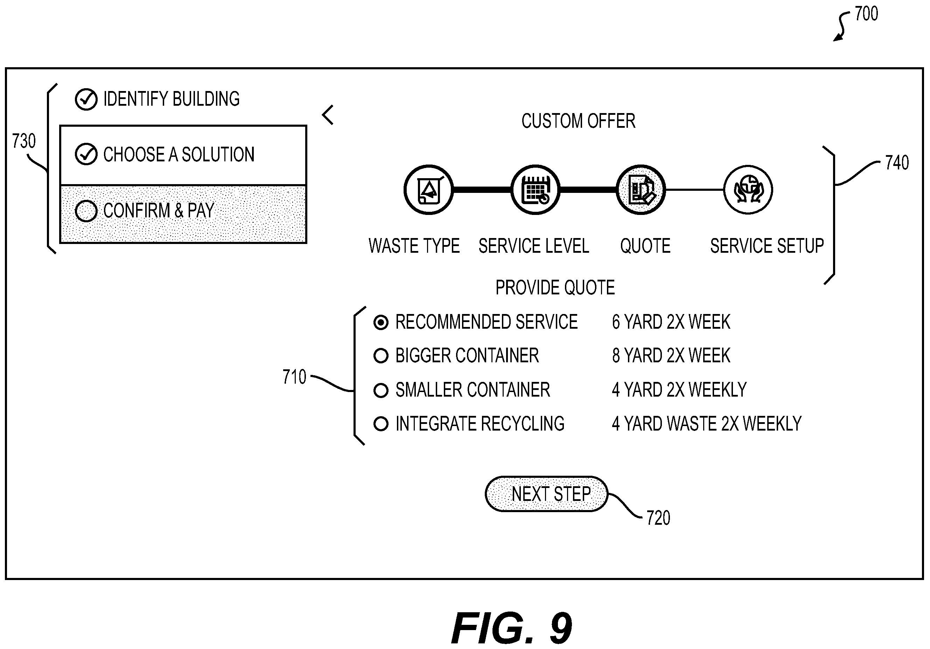

Fig. 9 shows another exemplary GUI 700, which corresponds with steps 260 and 270 described above and shown in Fig. 2. As can be seen in Fig. 9, GUI 700 may include a plurality of radio buttons 710, allowing the customer to select one of several different service options. These options include a "Recommended Service", a "Bigger Container" service, a "Smaller Container" service, and an "Integrated Recycling" Service. Next to each selectable option, a summary of the option (e.g., a container size and a service frequency) may be displayed. After making selections via radio buttons 710, the customer may be able to select a "Next Step" button 720 that will take the customer to a next GUI in the custom offer menu. Like the previous GUIs, GUI 700 may also include a status (e.g., a stage) indicator 730 provided on a left side and a status (e.g., a phase) indicator 740 provided at a top side. GUI 700 may generally be shown at the same stage as GUIs 400-600 (i.e., the "Choose A Solution" stage), and at the "Quote" phase.

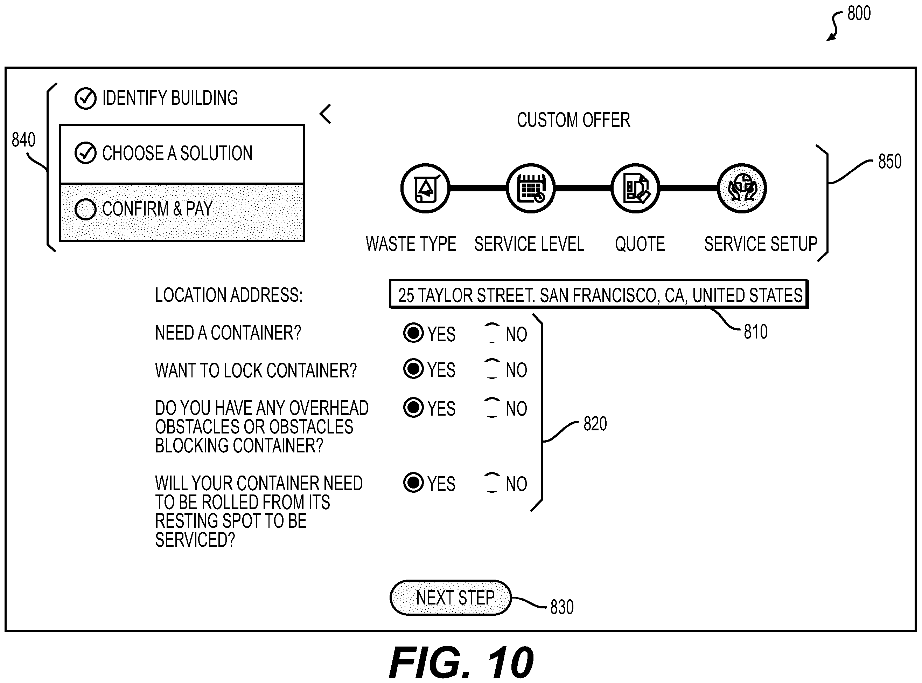

Fig. 10 shows another exemplary GUI 800 having a "Location" window 810 reflecting the customer's location information, and a plurality of radio buttons 820 located below window 810. Radio buttons 820 may allow the customer to select any number of different service options not associated with a container size, a container number, or a container frequency. In this example, the service options include whether a new container is needed, if locking of the container is desired, if any overhead obstacles block the container, and if the container will need to be rolled from its resting stop prior to being serviced. Radio buttons 820 may include a "yes" button and a "no" button for each service option. After making selections via radio buttons 820, the customer may be able to select a "Next Step" button 830 that will take the customer to a next GUI in the custom offer menu. Like the previous GUIs, GUI 800 may also include a status (e.g., a stage) indicator 840 provided on a left side and a status (e.g., a phase) indicator 850 provided at a top side. GUI 800 may generally be shown at the same stage as GUIs 400-700 (i.e., the "Choose A Solution" stage), and at the "Service Setup" phase.

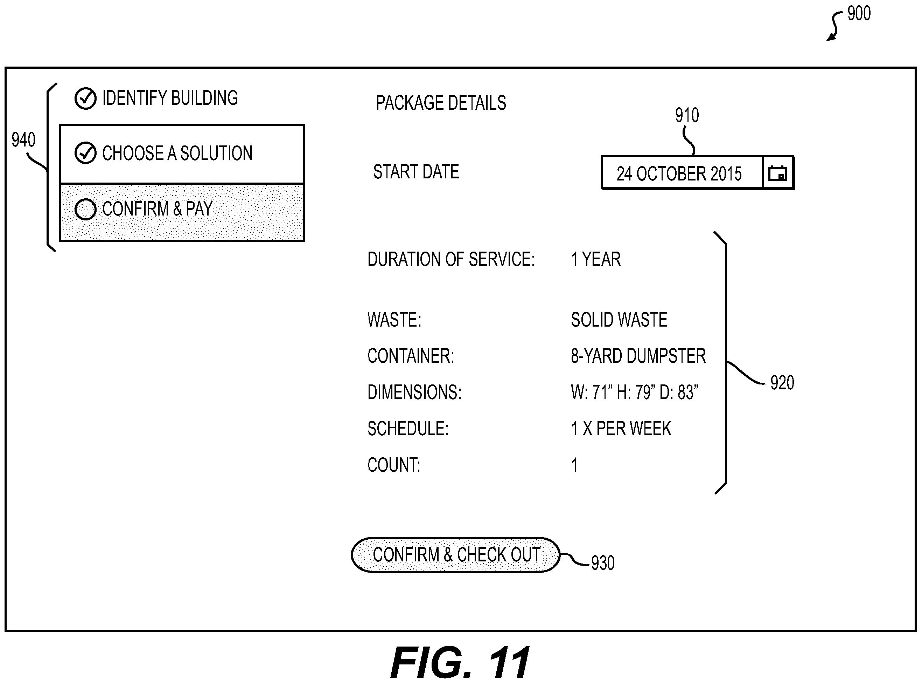

Fig. 11 shows a final exemplary GUI 900, which corresponds with step 240 described above and shown in Fig. 2. As can be seen in Fig. 11, GUI 900 may include a "Start Date" drop-down menu 910, allowing the customer to view a calendar and select a particular date on which waste services should begin. GUI 900 may also include a "Summary" area 920, which provides a summary of waste services that have been selected by the customer. In this example, area 920 indicates a duration of service, a type of waste to be removed from the customer location, a size of container to be placed at the customer location, dimensions of the container, a frequency of service, and a number of containers that will be serviced. It is contemplated, however, that more or less information may be displayed within area 920, if desired. A "Confirm & Checkout" button 930 may be provided below area 920, allowing the customer to pay for the summarized service. Like the previous GUIs, GUI 900 may also include a status (e.g., a stage) indicator 940 provided on a left side. GUI 900 may generally be shown at the final stage "Confirm & Pay".

The disclosed waste management system may be flexible, allowing a customer to tailor services to particular needs and preferences. For instance, the customer may be able to adjust container size, container number, and service frequency to meet the changing needs of the customer. This may allow the customer to pay for only the services that are needed, and yet still have the service needs met. In addition, the disclosed waste management system may provide a tool to help customers tailor a plan when the customer is unsure of their needs.

It is contemplated that customer portal 26 may have additional functionality not shown or described above, if desired. For example, customer portal 26 could additionally allow a customer to adjust and/or cancel a current service, to monitor service in real-time, to view past services, to report issues with service, to access service billing, to make payments for services, and/or for other things.

The interfaces illustrated in Figs. 3-12 are exemplary only and are provided to highlight certain aspects of the disclosed system. Other views and functionality are contemplated, as would be understood by one of skill in the art. It will be apparent to those skilled in the art that various modifications and variations can be made to the disclosed system. For example, although the steps of Fig. 2 are provided in a particular order and the GUIS of Figs. 3-12 illustrate different sequential stages and phases, it is contemplated that the steps, stages, and/or phases may be completed in a different order. It is also contemplated that a different number and/or types of steps, stages, and phases may be used. It is intended that the specification and examples be considered as exemplary only, with a true scope being indicated by the following claims and their equivalents.

## Claims

1. A system for managing waste services, comprising:
a customer portal; and
a central processing unit in electronic communication with the customer portal and being configured to:
receive, via the customer portal, information regarding an amount of business conducted at a customer location;
selectively determine a custom offer for recommended service based on the information; and
cause the custom offer to be displayed on the customer portal.

2. The system of claim 1, wherein the information includes at least one of a type of the customer location requiring service, a size of the customer location, a foot or vehicle traffic at the customer location, an occupancy of the customer location, a throughput of the customer location, or a revenue of the customer location

3. The system of claim 1 or 2, wherein:
the central processing unit is further configured to receive, via the customer portal, input indicative of a type of waste generated at the customer location; and
the central processing unit is configured to determine the custom offer based further on the type of waste.

4. The system of claim 3, wherein the type of waste is one of a standard waste, recycling, or both the standard waste and recycling.

5. The system of any preceding claim, wherein the custom offer includes a number of containers to be serviced at the customer location, a size of the containers, and a frequency of service; optionally wherein the custom offer also includes, in addition to the recommended service, options for selecting bigger or smaller service packages; and further optionally, wherein the custom offer further includes an option for selecting an integrated recycling option.

6. The system of any preceding claim, wherein the central processing unit is configured to display on the customer portal options for a customer to select one of a plurality of predetermined standard service packages or to request the custom offer.

7. The system of claim 6, wherein the plurality of predetermined standard service packages includes options for manually picking a number of containers to be serviced at the customer location, a size of the containers, and a frequency of service; optionally wherein the central processing unit is further configured to dynamically show a cost associated with a customer pick of the plurality predetermined standard service packages; optionally wherein the custom offer is automatically requested when the customer indicates that the customer is not sure of what size container to select.

8. The system of claim 6, wherein the central processing unit is further configured to cause a stage indicator to be displayed on the customer portal in association with different stages of selecting the plurality of predetermined standard service packages; optionally wherein the central processing unit is further configured to cause a phase indicator to be displayed on the customer portal in association with different phases of the custom offer being determined.

9. The system of any preceding claim, wherein the central processing unit is further configured to:
receive input via the customer portal indicative of a current service provider name, a current bin size, a current service frequency, and a current service cost; and
determine the custom offer based further on the input; or
receive input via the customer portal indicative of at least one of a need for new containers to be placed at the customer location, a need to lock containers, existence of obstacles near containers, and rolling requirements associated with service of containers; and
determine the custom offer based further on the input; or
receive input via the customer portal indicative of a desire to associate a waste service activity with a personal property or a business property; and
responsively cause the an associated personal or business property identifier to be displayed on the customer portal; or
receive input via the customer portal indicative of a desire for a waste service activity to be completed at a detected location of the customer portal; and
determine the custom offer for recommended service based further on the detected location.

10. The system of any preceding claim, wherein the central processing unit is further configured to cause a calendar to be displayed on the customer portal, the calendar showing services and corresponding fees available on different days in connection with the custom offer.

11. A method for managing waste services, the method comprising:
receiving information via a customer portal regarding at least one of a type of customer location requiring service, a size of the customer location, a foot or vehicle traffic at the customer location, an occupancy of the customer location, a throughput of the customer location, or a revenue of the customer location;
selectively determining a custom offer for recommended service based on the information; and
displaying the custom offer on the customer portal.

12. The method of claim 11, further including receiving, via the customer portal, input indicative of a type of waste generated at the customer location, wherein selectively determining the custom offer includes selectively determining the custom offer based further on the type of waste.

13. The method of claim 11 or 12, wherein selectively determining the custom offer includes selectively determining a number of containers to be serviced at the customer location, a size of the containers, and a frequency of service.

14. The method of any of claims 11, 12, or 13, further including displaying on the customer portal options for a customer to select one of a plurality of predetermined standard service packages or to request the custom offer, wherein the plurality of predetermined standard service packages include options for manually picking a number of containers to be serviced at the customer location, a size of the containers, and a frequency of service; optionally further including dynamically showing a cost associated with a customer pick of the plurality of predetermined standard service packages.

15. The method of any of claims 11 - 14, further including receiving input via the customer portal indicative of a current service provider name, a current bin size, a current service frequency, and a current service cost, wherein selectively determining the custom offer includes selectively determining the custom offer based further on the input.

16. A non-transitory computer readable medium containing computer-executable programming instructions for performing a method of waste management as defined in any of claims 11 - 15.
